# EUROPÄISCHE PATENTSCHRIFT

(11) **EP 2 283 074 B1**
(45) Veröffentlichungstag und Bekanntmachung des Hinweises auf die Patenterteilung: **10.09.2014**
(21) Anmeldenummer: 09749571.7
(22) Anmeldetag: 13.05.2009
(51) Int. Cl.: C08L 33/12, C08L 55/02, C08L 69/00

(54) **TIEFTEMPERATURZÄHE POLYCARBONAT-BLENDS**
POLYCARBONATE BLENDS OF LOW-TEMPERATURE TOUGHNESS
MÉLANGES DE POLYCARBONATES TENACES À BASSE TEMPÉRATURE

(30) Priorität: 21.05.2008 DE 102008024672
(43) Veröffentlichungstag der Anmeldung: 16.02.2011
(73) Patentinhaber: Bayer Intellectual Property GmbH, 40789 Monheim (DE)
(72) Erfinder: SEIDEL, Andreas, 41542 Dormagen (DE); AVTOMONOV, Evgeny, 51373 Leverksen (DE); WITTMANN, Dieter, 51375 Leverkusen (DE); FELDERMANN, Achim, 40477 Düsseldorf (DE)
(74) Vertreter: BIP Patents
(86) Internationale Anmeldenummer: PCT/EP2009/003386
(87) Internationale Veröffentlichungsnummer: WO 2009/141081

(56) Entgegenhaltungen:
- DE-A1- 2 320 786
- US-A1- 2002 099 116
- DATABASE WPI Week 200127 Thomson Scientific, London, GB; AN 2001-261017 XP002536038 -& JP 2001 049072 A (TEIJIN KASEI LTD) 20. Februar 2001 (2001-02-20)

## Beschreibung

Die Erfindung betrifft Polycarbonatzusammensetzungen, die Polyalkyl(alkyl)acrylat-(Co)Polymere mit einem bestimmten Molekulargewicht und einen Schlagzähmodifikator enthalten, sowie Formkörper erhältlich aus diesen Zusammensetzungen. Die erfindungsgemäßen Zusammensetzungen weisen ein gutes Eigenschaftsniveau insbesondere hinsichtlich Tieftemperaturzähigkeit und Schmelzefließfähigkeit, aber auch hinsichtlich Wärmeformbeständigkeit und Emissionen leichflüchtiger organischer Komponenten (VOCs) auf.

EP-A 0 455 116 beschreibt thermoplastisch verarbeitbare Polyalkyl(alkyl)acrylat-haltige Zusammensetzungen mit verbesserten thermischen und mechanischen Eigenschaften enthaltend 50 bis 90 Gew.-% Polymethylmethacrylat, 5 bis 40 Gew.-% Polycarbonat und 5 bis 40 Gew.-% eines Copolymerisats mit Polybutadien als Zähphasenbestandteil, wobei das Polymethylmethacrylat ein Molekulargewicht von über 70000 g/mol aufweist.

JP-A 1991/124764 offenbart Zusammensetzung ohne Perlmuttglanz enthaltend 20 bis 70 Gew.-Teile aromatisches Polycarbonat, 30 bis 80 Gew.-Teile Polyalkyl(alkyl)acrylat und 1 bis 10 Gew.-Teile eines Acrylpolymers mit Kern-Schale-Struktur.

JP-A 1996/085749 offenbart Zusammensetzungen mit guter Witterungsstabilität und guten mechanischen Eigenschaften enthaltend 5 bis 50 Gew.-Teile Polyalkyl(alkyl)acrylat, 30 bis 70 Gew.-Teile Polycarbonat, 3 bis 30 Gew.-Teile ABS als Schlagzähmodifikator und 1 bis 20 Gew.-Teile Talk spezieller Geometrie.

JP-A 1996/269314 offenbart wärmeformbeständige und thermoplastisch verarbeitbare Zusammensetzungen mit verbesserter Kältezähigkeit und Witterungsbeständigkeit enthaltend 1 bis 99 Gew.-Teile Polycarbonat oder Polyestercarbonat, 1 bis 99 Gew.-Teile Polyalkyl(alkyl)acrylat und 0,5 bis 50 Gew.-Teile Vinylmonomer-gepfropften Silikon-Alkyl(meth)acrylatpolymer-Kompositkautschuk.

JP-A 1998/007869 offenbart wärmeformbeständige, schlagzähe und witterungsstabile, thermoplastisch verarbeitbare Zusammensetzungen enthaltend 10 bis 90 Gew.-Teile Polycarbonat, 10 bis 90 Gew.-Teile Polyalkyl(alkyl)acrylat und 1 bis 50 Gew.-Teile Schlagzähmodifikator.

NL 9002254 beschreibt Blends mit guter Tieftemperaturzähigkeit aus 57 Gew.-% Polycarbonat, 18 Gew.-% ABS-Pfropfpolymer und 25 Gew.-% Polyalkyl(alkyl)acrylat mit einem gewichtsgemitteltem Molekulargewicht von 100.000 g/mol.

EP-A 0 463 368 offenbart Zusammensetzungen aus Polycarbonat, PMMA, ABS und einem monomeren Phosphorsäureester, die flammwidrig sind und sich durch eine verbesserte Bindenahtfestigkeit auszeichnen.

EP-A 1 592 740 beschreibt flammwidrige Zusammensetzungen mit guter Bindenahtfestigkeit, Chemikalienbeständigkeit, Reißdehnung, Wärmeformbeständigkeit und Schmelzefließfähigkeit enthaltend aromatisches Polycarbonat, PMMA, Styrol-, Butadien- und Acrylnitril-freies Pfropfpolymerisat und organischen Phosphorsäureester.

Die im Stand der Technik offenbarten Zusammensetzungen enthalten sämtlich Polyalkyl(alkyl)acrylat mit einem - verglichen mit den erfindungsgemäßen Zusammensetzungen - hohen gewichtsgemittelten Molekulargewicht und weisen für viele Anwendungsbereiche im Automobilbau, insbesondere für sicherheitsrelevante Bauteile, eine unzureichende Tieftemperaturzähigkeit und/oder eine unzureichende Wärmeformbeständigkeit und/oder eine unzureichende Schmelzefließfähigkeit auf.

Aufgabe der vorliegenden Erfindung war es, Polycarbonat-Zusammensetzungen bereitzustellen, die sich durch eine optimale Kombination aus verbesserter Tieftemperaturzähigkeit sowohl im Kerbschlag- als auch im multiaxialen Durchstoßversuch, verbesserter Schmelzefließfähigkeit und einer niedrigeren Emission an flüchtigen organischen Verbindungen (insbesondere an Acrylnitril) auszeichnen, wobei Wärmeformbeständigkeit und Zugeigenschaften auf unverändert gutem Niveau bleiben.

Überraschend wurde nun gefunden, dass Zusammensetzungen gemäß Anspruch 1, das gewünschte Eigenschaftsprofil erfüllen.

Gegenstand der vorliegenden Erfindung sind insbesondere Zusammensetzungen bestehend aus
A) 40 bis 93 Gew.-Teile, bevorzugt 50 bis 85 Gew.-Teile, besonders bevorzugt 55 bis 78 Gew.-Teile (jeweils bezogen auf die Summe der Gewichtsteile der Komponenten A+B+C) aromatisches Polycarbonat oder aromatisches Polyestercarbonat oder Mischungen hieraus,
B) 5 bis 40 Gew.-Teile, bevorzugt 10 bis 40 Gew.-Teile, besonders bevorzugt 12 bis 30 Gew.-Teile (jeweils bezogen auf die Summe der Gewichtsteile der Komponenten A+B+C) Polymethylmethacrylat und
C) 2 bis 40 Gew.-Teile, bevorzugt 5 bis 30 Gew.-Teile, besonders bevorzugt 7 bis 25 Gew.-Teile (jeweils bezogen auf die Summe der Gewichtsteile der Komponenten A+B+C) mindestens eines bestimmten Pfropfpolymers,
D.1) 0 bis 5 Gew.-Teile, bevorzugt 0 bis 2,5 Gew.-Teile, besonders bevorzugt 0 bis 1 Gew.-Teil (jeweils bezogen auf die Summe der Gewichtsteile der Komponenten A+B+C) Gleit- und Entformungsmittel (beispielsweise Wachse wie Pentaerythrittetrastearat, andere Wachse, oder Polyethylen),
D.2) 0 bis 5 Gew.-Teile, bevorzugt 0 bis 3 Gew.-Teile, besonders bevorzugt 0 bis 2 Gew.-Teile Antistatika und/oder Leitfähigkeitsadditive,
D.3) 0 bis 5 Gew.-Teile, 0 bis 2 Gew.-Teile, bevorzugt 0 bis 1 Gew.-Teil (jeweils bezogen auf die Summe der Gewichtsteile der Komponenten A+B+C) Stabilisatoren (beispielsweise Thermostabilisatoren, Antioxidanzien, Lichtschutzmittel, Verarbeitungsstabilisatoren, und Hydrolyseschutzmittel),
D.4) 0 bis 7 Gew.-Teile, bevorzugt 0 bis 5 Gew.-Teile, besonders bevorzugt 0 bis 3 Gew.-Teile (jeweils bezogen auf die Summe der Gewichtsteile der Komponenten A+B+C) Farbstoffe und Pigmente,
D.5) 0 bis 10 Gew.-Teile, bevorzugt 0 bis 5 Gew.-Teile, besonders bevorzugt 0 bis 2 Gew.-Teile (jeweils bezogen auf die Summe der Gewichtsteile der Komponenten A+B+C) mineralische Füll- und Verstärkungsstoffe,
D.6) 0 bis 5 Gew.-Teile, bevorzugt 0 bis 2 Gew.-Teile, besonders bevorzugt 0 bis 1 Gew.-Teil (jeweils bezogen auf die Summe der Gewichtsteile der Komponenten A+B+C), insbesondere frei von Flammschutzmittel (beispielsweise halogenhaltige Flammschutzmittel und halogenfreie Flammschutzmittel wie Phosphorsäureester),
D.7) 0 bis 2 Gew.-Teile, bevorzugt 0 bis 0,5 Gew.-Teil, besonders bevorzugt 0 bis 0,2 Gew.-Teile (jeweils bezogen auf die Summe der Gewichtsteile der Komponenten A+B+C), insbesondere frei von einer Komponente ausgewählt aus Antidrippingmitteln und Flammschutzsynergisten, und
D.8) 0 bis 10 Gew.-Teile, bevorzugt 0 bis 5 Gew.-Teile, besonders bevorzugt 0 bis 2 Gew.-Teile (jeweils bezogen auf die Summe der Gewichtsteile der Komponenten A+B+C) insbesondere frei von einer weiteren polymeren oder oligomeren Verbindung, beispielsweise ausgewählt aus der Gruppe der von Komponente B verschiedenen Vinyl(co)polymere, Polyester, Polysulfone, Polyketone, Polyetherketone, Polyetheretherketone, Silikone, Polyphenylenoxid, und Polymethylenoxid,
dadurch gekennzeichnet, dass das Polymethylmethacrylat gemäß Komponente B) ein gewichtsgemitteltes Molekulargewicht Mw (bestimmt durch GPC in THF bei 40°C mit Polystyrol als Standard) von 25000 bis 70000 g/mol, bevorzugt von 30000 bis 65000 g/mol, besonders bevorzugt von 40000 bis 62000 g/mol, ganz besonders bevorzugt von 50000 bis 60000 g/mol aufweist, und wobei das Verhältnis von gewichtgemitteltem zu zahlengemitteltem Molekulargewicht Mw/Mn des Polymethylmethacrylat gemäß Komponente B), bestimmt durch GPC in THF bei 40°C mit Polystyrol als Standard, einen Wert zwischen 1 und 2,5 besitzt,
wobei alle Gewichtsteilangaben in der vorliegenden Anmeldung so normiert sind, dass die Summe der Gewichtsteile der Komponenten A+B+C in der Zusammensetzung 100 ergeben.

### Komponente A

Erfindungsgemäß geeignete aromatische Polycarbonate und/oder aromatische Polyestercarbonate gemäß Komponente A sind literaturbekannt oder nach literaturbekannten Verfahren herstellbar (zur Herstellung aromatischer Polycarbonate siehe beispielsweise Schnell, "Chemistry and Physics of Polycarbonates", Interscience Publishers, 1964 sowie die DE-AS 1 495 626, DE-A 2 232 877, DE-A 2 703 376, DE-A 2 714 544, DE-A 3 000 610, DE-A 3 832 396; zur Herstellung aromatischer Polyestercarbonate, z. B. DE-A 3 077 934).

Die Herstellung aromatischer Polycarbonate erfolgt z. B. durch Umsetzung von Diphenolen mit Kohlensäurehalogeniden, vorzugsweise Phosgen und/oder mit aromatischen Dicarbonsäuredihalogeniden, vorzugsweise Benzoldicarbonsäuredihalogeniden, nach dem Phasengrenzflächenverfahren, gegebenenfalls unter Verwendung von Kettenabbrechern, beispielsweise Monophenolen und gegebenenfalls unter Verwendung von trifunktionellen oder mehr als trifunktionellen Verzweigern, beispielsweise Triphenolen oder Tetraphenolen. Ebenso ist eine Herstellung über ein Schmelzepolymerisationsverfahren durch Umsetzung von Diphenolen mit beispielsweise Diphenylcarbonat möglich.

Diphenole zur Herstellung der aromatischen Polycarbonate und/oder aromatischen Polyestercarbonate sind vorzugsweise solche der Formel (I) 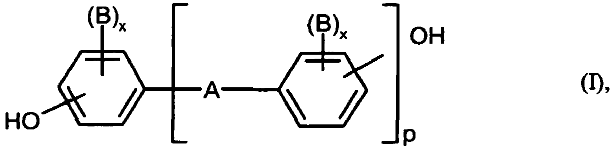 wobei
- A: eine Einfachbindung, C₁ bis C₅-Alkylen, C₂ bis C₅-Alkyliden, C₅ bis C₆-Cycloalkyliden, - O-, -SO-, -CO-, -S-, -SO₂-, C₆ bis C₁₂-Arylen, an das weitere aromatische gegebenenfalls Heteroatome enthaltende Ringe kondensiert sein können, oder ein Rest der Formel (II) oder (III) 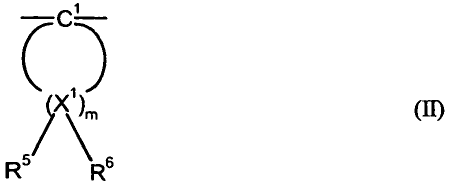 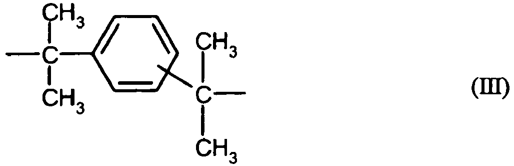
- B: jeweils C₁ bis C₁₂-Alkyl, vorzugsweise Methyl, Halogen, vorzugsweise Chlor und/oder Brom
- x: jeweils unabhängig voneinander 0, 1 oder 2,
- p: 1 oder 0 sind, und
- R⁵ und R⁶: für jedes X¹ individuell wählbar, unabhängig voneinander Wasserstoff oder C₁ bis C₆ Alkyl, vorzugsweise Wasserstoff, Methyl oder Ethyl,
- X¹: Kohlenstoff und
- m: eine ganze Zahl von 4 bis 7, bevorzugt 4 oder 5 bedeuten, mit der Maßgabe, dass an mindestens einem Atom X¹, R⁵ und R⁶ gleichzeitig Alkyl sind.

Bevorzugte Diphenole sind Hydrochinon, Resorcin, Dihydroxydiphenole, Bis-(hydroxyphenyl)-C₁-C₅-alkane, Bis-(hydroxyphenyl)-C₅-C₆-cycloalkane, Bis-(hydroxyphenyl)-ether, Bis-(hydroxy-phenyl)-sulfoxide, Bis-(hydroxyphenyl)-ketone, Bis-(hydroxyphenyl)-sulfone und α,α-Bis-(hydroxyphenyl)-diisopropyl-benzole sowie deren kernbromierte und/oder kernchlorierte Derivate.

Besonders bevorzugte Diphenole sind 4,4'-Dihydroxydiphenyl, Bisphenol-A, 2,4-Bis(4-hydroxy-phenyl)-2-methylbutan, 1,1-Bis-(4-hydroxyphenyl)-cyclohexan, 1,1-Bis-(4-hydroxyphenyl)-3.3.5-trimethylcyclohexan, 4,4'-Dihydroxydiphenylsulfid, 4,4'-Dihydroxydiphenylsulfon sowie deren diund tetrabromierten oder chlorierten Derivate wie beispielsweise 2,2-Bis(3-Chlor-4-hydroxyphenyl)-propan, 2,2-Bis-(3,5-dichlor-4-hydroxyphenyl)-propan oder 2,2-Bis-(3,5-dibrom-4-hydroxyphenyl)-propan. Insbesondere bevorzugt ist 2,2-Bis-(4-hydroxyphenyl)-propan (Bisphenol-A).

Es können die Diphenole einzeln oder als beliebige Mischungen eingesetzt werden. Die Diphenole sind literaturbekannt oder nach literaturbekannten Verfahren erhältlich.

Für die Herstellung der thermoplastischen, aromatischen Polycarbonate geeignete Kettenabbrecher sind beispielsweise Phenol, p-Chlorphenol, p-tert.-Butylphenol oder 2,4,6-Tribromphenol, aber auch langkettige Alkylphenole, wie 4-[2-(2,4,4-Trimethylpentyl)]-phenol, 4-(1,3-Tetramethylbutyl)-phenol gemäß DE-A 2 842 005 oder Monoalkylphenol oder Dialkylphenole mit insgesamt 8 bis 20 Kohlenstoffatomen in den Alkylsubstituenten, wie 3,5-di-tert.-Butylphenol, p-iso-Octylphenol, p-tert.-Octylphenol, p-Dodecylphenol und 2-(3,5-Dimethylheptyl)-phenol und 4-(3,5-Dimethylheptyl)-phenol. Die Menge an einzusetzenden Kettenabbrechern beträgt im allgemeinen zwischen 0,5 mol-%mol-%, und 10 mol-%, bezogen auf die Molsumme der jeweils eingesetzten Diphenole.

Die thermoplastischen, aromatischen Polycarbonate haben bevorzugt Gewichtsmittelmolekulargewichte (M_{w}, gemessen z. B. durch GPC, Ultrazentrifuge oder Streulichtmessung) von 22000 bis 35000 g/mol, besonders bevorzugt von 23000 bis 32000 g/mol, insbesondere von 24000 bis 30000 g/mol.

Die thermoplastischen, aromatischen Polycarbonate können in bekannter Weise verzweigt sein, und zwar vorzugsweise durch den Einbau von 0,05 bis 2,0 mol-%, bezogen auf die Summe der eingesetzten Diphenole, an dreifunktionellen oder mehr als dreifunktionellen Verbindungen, beispielsweise solchen mit drei und mehr phenolischen Gruppen.

Geeignet sind sowohl Homopolycarbonate als auch Copolycarbonate. Zur Herstellung erfindungsgemäßer Copolycarbonate gemäß Komponente A können auch 1 bis 25 Gew.%, vorzugsweise 2,5 bis 25 Gew.%, bezogen auf die Gesamtmenge an einzusetzenden Diphenolen, Polydiorganosiloxane mit Hydroxyaryloxy-Endgruppen eingesetzt werden. Diese sind bekannt (US 3 419 634) und nach literaturbekannten Verfahren herstellbar. Die Herstellung Polydiorganosiloxanhaltiger Copolycarbonate ist in der DE-A 3 334 782 beschrieben.

Bevorzugte Polycarbonate sind neben den Bisphenol-A-Homopolycarbonaten die Copolycarbonate von Bisphenol-A mit bis zu 15 mol-%, bezogen auf die Molsummen an Diphenolen, anderen als bevorzugt oder besonders bevorzugt genannten Diphenolen, insbesondere 2,2-Bis(3,5-dibrom-4-hydroxyphenyl)-propan.

Aromatische Dicarbonsäuredihalogenide zur Herstellung von aromatischen Polyestercarbonaten sind vorzugsweise die Disäuredichloride der Isophthalsäure, Terephthalsäure, Diphenylether-4,4'-dicarbonsäure und der Naphthalin-2,6-dicarbonsäure.

Besonders bevorzugt sind Gemische der Disäuredichloride der Isophthalsäure und der Terephthalsäure im Verhältnis zwischen 1:20 und 20:1.

Bei der Herstellung von Polyestercarbonaten wird zusätzlich ein Kohlensäurehalogenid, vorzugsweise Phosgen, als bifunktionelles Säurederivat mit verwendet.

Als Kettenabbrecher für die Herstellung der aromatischen Polyestercarbonate kommen außer den bereits genannten Monophenolen noch deren Chlorkohlensäureester sowie die Säurechloride von aromatischen Monocarbonsäuren, die gegebenenfalls durch C₁ bis C₂₂-Alkylgruppen oder durch Halogenatome substituiert sein können, sowie aliphatische C₂ bis C₂₂-Monocarbonsäurechloride in Betracht.

Die Menge an Kettenabbrechern beträgt jeweils 0,1 bis 10 mol-%, bezogen im Falle der phenolischen Kettenabbrecher auf Mol Diphenol und im Falle von Monocarbonsäurechlorid-Kettenabbrecher auf Mol Dicarbonsäuredichlorid.

Die aromatischen Polyestercarbonate können auch aromatische Hydroxycarbonsäuren eingebaut enthalten.

Die aromatischen Polyestercarbonate können sowohl linear als auch in bekannter Weise verzweigt sein (siehe dazu DE-A 2 940 024 und DE-A 3 007 934).

Als Verzweigungsmittel können beispielsweise drei- oder mehrfunktionelle Carbonsäurechloride, wie Trimesinsäuretrichlorid, Cyanursäuretrichlorid, 3,3'-,4,4'-Benzophenon-tetracarbonsäuretetrachlorid, 1,4,5,8-Napthalintetracarbon-säuretetrachlorid oder Pyromellithsäwetetrachlorid, in Mengen von 0,01 bis 1,0 mol-% (bezogen auf eingesetzte Dicarbonsäuredichloride) oder drei- oder mehrfunktionelle Phenole, wie Phloroglucin, 4,6-Dimethyl-2,4,6-tri-(4-hydroxyphenyl)-hept-2-en, 4,6-Dimethyl-2,4-6-tri-(4-hydroxyphenyl)-heptan, 1,3,5-Tri-(4-hydroxyphenyl)-benzol, 1,1,1-Tri-(4-hydroxyphenyl)-ethan, Tri-(4-hydroxyphenyl)-phenylmethan, 2,2-Bis[4,4-bis(4-hydroxy-phenyl)-cyclohexyl]-propan, 2,4-Bis(4-hydroxyphenyl-isopropyl)-phenol, Tetra-(4-hydroxyphenyl)-methan, 2,6-Bis(2-hydroxy-5-methyl-benzyl)-4-methyl-phenol, 2-(4-Hydroxyphenyl)-2-(2,4-dihydroxyphenyl)-propan, Tetra-(4-[4-hydroxyphenyl-isopropyl]-phenoxy)-methan, 1,4-Bis[4,4'-dihydroxytri-phenyl)-methyl]-benzol, in Mengen von 0,01 bis 1,0 mol-% bezogen auf eingesetzte Diphenole verwendet werden. Phenolische Verzweigungsmittel können mit den Diphenolen vorgelegt, Säurechlorid-Verzweigungsmittel können zusammen mit den Säuredichloriden eingetragen werden.

In den thermoplastischen, aromatischen Polyestercarbonaten kann der Anteil an Carbonatstruktureinheiten beliebig variieren. Vorzugsweise beträgt der Anteil an Carbonatgruppen bis zu 100 mol-%, insbesondere bis zu 80 mol-%, besonders bevorzugt bis zu 50 mol%, bezogen auf die Summe an Estergruppen und Carbonatgruppen. Sowohl der Ester- als auch der Carbonatanteil der aromatischen Polyestercarbonate kann in Form von Blöcken oder statistisch verteilt im Polykondensat vorliegen.

Die thermoplastischen, aromatischen Polycarbonate und Polyestercarbonate können allein oder im beliebigen Gemisch eingesetzt werden.

### Komponente B

Komponente B ist Polymethylmethacrylat.

Die Herstellung der Komponente B erfolgt in bekannter Weise durch Polymerisation des bzw. der Monomeren in Masse, in Lösung oder in Dispersion (Kunststoff-Handbuch, Band IX, Polymethacrylate, Carl Hanser Verlag München 1975, Seiten 22-37).

Durch Zusatz von Reglern, vor allem von Schwefelreglern, insbesondere von Mercaptanen, werden die Molekulargewichte der Komponente B so eingestellt, dass das erfindungsgemäße gewichtsgemittelte Molekulargewicht Mw (bestimmt durch GPC in THF bei 40°C mit Polystyrol als Standard) resultiert.

Die Komponente B weist eine schmale Molekulargewichtsverteilung auf: Komponente B hat ein Verhältnis von gewichtgemitteltem zu zahlengemitteltem Molekulargewicht Mw/Mn bestimmt durch GPC in THF bei 40°C mit Polystyrol als Standard von bevorzugt 1 bis 2,5, besonders bevorzugt 1,3 bis 2,2, insbesondere bevorzugt 1,5 bis 2,0.

### Komponente C

Die Komponente C umfasst ein oder mehrere Pfropfpolymerisate von
C.1 10 bis 90 Gew.-%, vorzugsweise 20 bis 60 Gew.-%, insbesondere 25 bis 50 Gew.-%, bezogen auf Komponente C, wenigstens eines Vinylmonomeren auf
C.2 90 bis 10 Gew.-%, vorzugsweise 80 bis 40 Gew.-%, insbesondere 75 bis 50 Gew.-%, bezogen auf Komponente C, wenigstens einer Pfropfgrundlage ausgewählt aus der Gruppe bestehend aus Dienkautschuke, EP(D)M-Kautschuke (d.h. solche auf Basis Ethylen/Propylen und gegebenenfalls Dien), Acrylat-, Polyurethan-, Silikon-, Silikonacrylat-, Chloropren und Ethylen/Vinylacetat-Kautschuke.

Die Pfropfgrundlage C.2 hat im allgemeinen eine mittlere Teilchengröße (d₅₀-Wert) von 0,05 bis 10 µm, vorzugsweise 0,1 bis 5 µm, besonders bevorzugt 0,2 bis 1 µm.

Monomere C.1 sind vorzugsweise mindestens ein Monomer ausgewählt aus der Gruppe bestehend aus
Vinylaromaten und/oder kernsubstituierten Vinylaromaten (wie beispielsweise Styrol, α-Methylstyrol, p-Methylstyrol, p-Chlorstyrol),
Vinylcyanide (wie beispielsweise ungesättigte Nitrile wie Acrylnitril und Methacrylnitril),
(Meth)Acrylsäure-(C₁-C₈)-Alkylester (wie beispielsweise Methylmethacrylat, Butylacrylat), Anhydride ungesättigter Carbonsäuren (wie beispielsweise Maleinsäureanhydrid), und
Imide ungesättigter Carbonsäuren (wie beispielsweise N-Phenyl-Maleinimid).

Besonders bevorzugte Monomere C.1 sind ausgewählt aus mindestens einem der Monomere Styrol, Acrylnitril, α-Methylstyrol, Methylmethacrylat, n-Butylacrylat, t-Butylacrylat und Maleinsäureanhydrid.

Höchst bevorzugte Monomere C.1 sind Styrol, n-Butylacrylat, t-Butylacrylat und Methylmethacrylat, insbesondere Methylmethacrylat.

Bevorzugte Pfropfgrundlagen C.2 sind Silikonkautschuke, Silikonacrylatkautschuke, Dienkautschuke (beispielsweise auf Basis Butadien und Isopren) oder Gemische von Dienkautschuken. Unter Dienkautschuken im erfindungsgemäßen Sinne sind auch Copolymerisate von Dienkautschuken oder deren Gemischen mit weiteren copolymerisierbaren Monomeren (z.B. gemäß C.1.1 und C.1.2) zu verstehen. Die Pfropfgrundlagen C.2 weisen im allgemeinen eine Glasübergangstemperatur von < 10°C, vorzugsweise < 0°C, besonders bevorzugt < -10°C auf.

Besonders bevorzugte Polymerisate C sind beispielsweise ABS-Polymerisate und MBS-Polymerisate, bevorzugt solche in Emulsionspolymerisation hergestellten, wie sie z.B. in der DE-OS 2 035 390 (=US-PS 3 644 574) oder in der DE-OS 2 248 242 (=GB-PS 1 409 275) bzw. in Ullmanns, Enzyklopädie der Technischen Chemie, Bd. 19 (1980), S. 280 ff. beschrieben sind. Der Gelanteil der Pfropfgrundlage C.2 beträgt mindestens 20 Gew.-%, im Falle von im Emulsionspolymerisation hergestellten Pfropfgrundlagen C.2 vorzugsweise mindestens 40 Gew.-% (in Toluol gemessen).

Vorzugsweise weist das Pfropfpolymerisat aus den Komponenten C.1 und C.2 eine Kern-Schale-Struktur auf, wobei die Komponente C.1 die Schale bildet (auch als Hülle bezeichnet) und die Komponente C.2 den Kern ausbildet (siehe bspw. Ullmann's Encyclopedia of Industrial Chemistry, VCH-Verlag, Vol. A21, 1992, Seite 635 und Seite 656.

Die Pfropfcopolymerisate C werden durch radikalische Polymerisation, z.B. durch Emulsions-, Suspensions-, Lösungs- oder Massepolymerisation, vorzugsweise durch Emulsionspolymerisation hergestellt.

Besonders geeignete Pfropfkautschuke sind auch Pfropfcopolymerisate C, die im Emulsionspolymerisationsverfahren durch Redox-Initiierung mit einem Initiatorsystem aus organischem Hydroperoxid und Ascorbinsäure gemäß US-P 4 937 285 hergestellt werden.

Da bei der Pfropfreaktion die Pfropfmonomeren bekanntlich nicht unbedingt vollständig auf die Pfropfgrundlage aufgepfropft werden, werden erfindungsgemäß unter Pfropfpolymerisaten C auch solche Produkte verstanden, die durch (Co)Polymerisation der Pfropfmonomere in Gegenwart der Pfropfgrundlage gewonnen werden und bei der Aufarbeitung mit anfallen.

Geeignete Acrylatkautschuke gemäß C.2 der Polymerisate C sind vorzugsweise Polymerisate aus Acrylsäurealkylestern, gegebenenfalls mit bis zu 40 Gew.-%, bezogen auf C.2 anderen polymerisierbaren, ethylenisch ungesättigten Monomeren. Zu den bevorzugten polymerisierbaren Acrylsäureestern gehören C₁ bis C₈-Alkylester, beispielsweise Methyl-, Ethyl-, Butyl-, n-Octyl- und 2-Ethylhexylester; Halogenalkylester, vorzugsweise Halogen-C₁-C₈-alkylester, wie Chlorethylacrylat sowie Mischungen dieser Monomeren.

Zur Vernetzung können Monomere mit mehr als einer polymerisierbaren Doppelbindung copolymerisiert werden. Bevorzugte Beispiele für vernetzende Monomere sind Ester ungesättigter Monocarbonsäuren mit 3 bis 8 C-Atomen und ungesättigter einwertiger Alkohole mit 3 bis 12 C-Atomen, oder gesättigter Polyole mit 2 bis 4 OH-Gruppen und 2 bis 20 C-Atomen, wie Ethylenglykoldimethacrylat, Allylmethacrylat; mehrfach ungesättigte heterocyclische Verbindungen, wie Trivinyl- und Triallylcyanurat; polyfunktionelle Vinylverbindungen, wie Di- und Trivinylbenzole; aber auch Triallylphosphat und Diallylphthalat. Bevorzugte vernetzende Monomere sind Allylmethacrylat, Ethylenglykoldimethacrylat, Diallylphthalat und heterocyclische Verbindungen, die mindestens drei ethylenisch ungesättigte Gruppen aufweisen. Besonders bevorzugte vernetzende Monomere sind die cyclischen Monomere Triallylcyanurat, Triallylisocyanurat, Triacryloylhexahydro-s-triazin, Triallylbenzole. Die Menge der vernetzenden Monomere beträgt vorzugsweise 0,02 bis 5, insbesondere 0,05 bis 2 Gew.-%, bezogen auf die Pfropfgrundlage C.2. Bei cyclischen vernetzenden Monomeren mit mindestens drei ethylenisch ungesättigten Gruppen ist es vorteilhaft, die Menge auf unter 1 Gew.-% der Pfropfgrundlage C.2 zu beschränken.

Bevorzugte "andere" polymerisierbare, ethylenisch ungesättigte Monomere, die neben den Acrylsäureestern gegebenenfalls zur Herstellung der Pfropfgrundlage C.2 dienen können, sind z.B. Acrylnitril, Styrol, α-Methylstyrol, Acrylamide, Vinyl-C₁-C₆-alkylether, Methylmethacrylat, Butadien. Bevorzugte Acrylatkautschuke als Pfropfgrundlage C.2 sind Emulsionspolymerisate, die einen Gelgehalt von mindestens 60 Gew.-% aufweisen.

Geeignete Silikonkautschuke gemäß C.2. können durch Emulsionspolymerisation hergestellt werden, wie beispielsweise in US 2891920 und US 3294725 beschrieben. Weitere geeignete Pfropfgrundlagen gemäß C.2 sind Silikonkautschuke mit pfropfaktiven Stellen, wie sie in den DE-OS 3 704 657, DE-OS 3 704 655, DE-OS 3 631 540 und DE-OS 3 631 539 beschrieben werden.

Als Pfropfgrundlagen C.2 sind erfindungsgemäß auch Silikonacrylat-Kautschuke geeignet. Diese Silikonacrylat-Kautschuke sind Komposit-Kautschuke mit pfropfaktiven Stellen enthaltend 10 - 90 Gew.-% Silikonkautschuk-Anteil und 90 bis 10 Gew.-% Polyalkyl(meth)acrylatkautschuk-Anteil, wobei sich die beiden genannten Kautschuk-Komponenten im Komposit-Kautschuk gegenseitig durchdrungen können, so dass sie sich nicht wesentlich voneinander trennen lassen, oder aber eine Kern-Schale-Struktur aufweisen können. Silikonacrylat-Kautschuke sind bekannt und beispielsweise beschrieben in US 5,807,914, EP 430134 und US 4888388. Vorzugsweise eingesetzt werden solche Pfropfpolymerere auf Basis von Silikonacrylat-Kautschuken, hergestellt in Emulsionspolymerisation, mit C. 1 Methylmethacrylat oder C1.1 Styrol und C 1.2 Acrylnitril.

Der Gelgehalt der Pfropfgrundlage C.2 wird bei 25°C in einem geeigneten Lösungsmittel bestimmt (M. Hoffmann, H. Krömer, R. Kuhn, Polymeranalytik I und II, Georg Thieme-Verlag, Stuttgart 1977).

Die mittlere Teilchengröße d₅₀ ist der Durchmesser, oberhalb und unterhalb dessen jeweils 50 Gew.-% der Teilchen liegen. Er kann mittels Ultrazentrifugenmessung (W. Scholtan, H. Lange, Kolloid, Z. und Z. Polymere 250 (1972), 782-1796) bestimmt werden.

### Komponente D

Die erfindungsgemäßen Zusammensetzungen können weiterhin Zusatzstoffe (Polymeradditive) enthalten, insofern und in solcher Menge, als dass sie die Tieftemperaturzähigkeit und Wärmeformbeständigkeit der Zusammensetzungen im Wesentlichen nicht negativ beeinflussen. In diesem Sinne weisen die erfindungsgemäßen Zusammensetzungen in bevorzugter Ausführungsform eine Wärmeformbeständigkeit nach Vicat B 120 gemäß ISO306 von mindestens 110°C, höchst bevorzugt von mindestens 115°C auf und lassen sich bei geeigneten Verarbeitungsbedingungen zu Formkörpern verarbeiten, welche bevorzugt bei -10°C, höchst bevorzugt auch bei -20°C noch ein zähes Bruchverhalten im Kerbschlagversuch gemäß ISO 180-1A zeigen.

Die erfindungsgemäßen Zusammensetzungen werden hergestellt, indem man die jeweiligen Bestandteile in bekannter Weise vermischt und bei Temperaturen von 200°C bis 340°C, bevorzugt bei 250°C bis 300°C in üblichen Aggregaten wie Innenknetern, Extrudern und Doppelwellenschnecken schmelzcompoundiert und schmelzextrudiert.

Die Vermischung der einzelnen Bestandteile kann in bekannter Weise sowohl sukzessive als auch simultan erfolgen, und zwar sowohl bei etwa 20°C (Raumtemperatur) als auch bei höherer Temperatur.

Die erfindungsgemäßen Zusammensetzungen können zur Herstellung von Formteilen jeder Art verwendet werden. Diese können beispielsweise durch Spritzguss, Extrusion und Blasformverfah-ren hergestellt werden. Eine weitere Form der Verarbeitung ist die Herstellung von Formkörpern durch Tiefziehen aus zuvor hergestellten Platten oder Folien.

Gegenstand der Erfindung sind daher auch ein Verfahren zur Herstellung der Zusammensetzung, deren Verwendung zur Herstellung von Formteilen sowie die Formteile selbst.

Beispiele für solche Formteile sind Folien, Profile, Gehäuseteile jeder Art, z.B. für Haushaltsgeräte wie Saftpressen, Kaffeemaschinen, Mixer; für Büromaschinen wie Monitore, Drucker, Kopierer; weiterhin Platten, Rohre, Elektroinstallationskanäle, Profile für den Bausektor, Innenausbau und Außenanwendungen; Teile aus dem Gebiet der Elektrotechnik wie Schalter und Stecker sowie Automobilinnen- und -außenteile.

Insbesondere können die erfindungsgemäßen Zusammensetzungen beispielsweise zur Herstellung von folgenden Formteilen verwendet werden:
Innenausbauteile für Schienenfahrzeuge, Schiffe, Flugzeuge, Busse und Automobile, Gehäuse von Kleintransformatoren enthaltenden Elektrogeräten, Gehäuse für Geräte zur Informationsverbreitung und -Übermittlung, Gehäuse und Verkleidung für medizinische Zwecke, Massagegeräte und Gehäuse dafür, Spielfahrzeuge für Kinder, Flächige Wandelemente, Gehäuse für Sicherheitseinrichtungen, Formteile für Sanitär- und Badausrüstungen, Abdeckgitter für Lüfteröffnungen, Gehäuse für Gartengeräte.

Die folgenden Beispiele dienen der weiteren Erläuterung der Erfindung.

### Beispiele

Die in der Tabelle 1 angegebenen und nachfolgend kurz erläuterten Komponenten wurden auf einer ZSK-25 bei 260°C schmelzcompoundiert. Die Prüfkörper wurden auf einer Spritzgießmaschine Typ Arburg 270 E bei 260°C bzw. bei 300°C hergestellt.

### Komponente A

Lineares Polycarbonat auf Basis Bisphenol A mit einem gewichtsgemittelten Molekulargewicht (M_{w}) gemäß GPC gemessen in Dichlormethan von 28.000 g/Mol.

### Komponente B-1

Polymethylmethacrylat mit einem gewichtsgemittelten Molekulargewicht (M̅_{w}) bestimmt durch GPC in THF bei 40°C mit Polystyrol als Standard von 74000 g/mol und einem Verhältnis Mw/Mn von 1,9.

### Komponente B-2

Polymethylmethacrylat mit einem gewichtsgemittelten Molekulargewicht (M̅_{w}) bestimmt durch GPC in THF bei 40°C mit Polystyrol als Standard von 58000 g/mol und einem Verhältnis Mw/Mn von 1,9.

### Komponente B-3

Polymethylmethacrylat mit einem gewichtsgemittelten Molekulargewicht (M̅_{w}) bestimmt durch GPC in THF bei 40°C mit Polystyrol als Standard von 15000 g/mol.

### Komponente C-1

ABS-Pfropfpolymerisat von 40 Gew.-Teilen eines Copolymerisats aus Styrol und Acrylnitril im Gewichtsverhältnis 72:28 auf 60 Gew.-Teile vernetzten Polybutadienkautschuk, hergestellt durch Emulsionspolymerisaten, mit einem mittleren Teilchendurchmesser von d₅₀ =0,3 µm und mit einer Kern-Schale-Struktur.

### Komponente D

### Komponente D-1:

### Pentaerythrittetrastearat (PETS)

### Komponente D-2:

Thermostabilisator bestehend aus 50 Gew.-%, bezogen auf die Komponente D-2, Irganox 1076 und 50 Gew.-%, bezogen auf die Komponente D-2, Irganox B900 (beide Ciba Specialty Chemicals, Basel, Schweiz).

Die Kerbschlagzähigkeit wird an Prüfstäben der Abmessung 80 mm x 10 mm x 4 mm gemäß ISO 180-1A bei Raumtemperatur [aₖ(23°C) ] als auch in Intervallen von 10°C stufenweise bis herab zu -30°C bestimmt. Als Steilabfall-Temperatur wird diejenige Temperatur ermittelt, bei der der Übergang von zähem zum spröden Bruchverhalten beobachtet wird. Die Kerbschlagzähigkeiten und Steilabfall-Temperaturen werden an Prüfstäben, welche a) bei 260°C und b) bei 300°C Schmelzetemperatur im Spritzguss hergestellt wurden, bestimmt.

Als Maß für die Wärmeformbeständigkeit dient der Vicat B120-Wert bestimmt an Prüfstäben der Abmessung 80 mm x 10 mm x 4 mm gemäß ISO 306.

Als Maß für die Schmelzefließfähigkeit dient die Schmelzevolumenfließrate (MVR) bestimmt nach ISO 1133 bei 260°C mit einer Stempellast von 5 kg sowie die Schmelzeviskosität bestimmt gemäß ISO 11443 bei 260°C und einer Scherrate von 1000 s⁻¹.

Der E-Modul, die Streckspannung und die Reißdehnung werden im Zugversuch nach ISO 527 bestimmt.

Die Emission flüchtiger organischer Verbindungen (VOCs) wird gemäß VDA 277 bestimmt an Prüfkörpern der Abmessung 80 mm x 10 mm x 4 mm, die bei 260°C bzw. bei 300°C im Spritzgußverfahren hergestellt wurden.

Restgehalte an Acrylnitrilmonomeren werden ermittelt mittels Headspace-Verfahren an Prüfstäben der Abmessung 80 mm x 10 mm x 4 mm, die bei 260°C bzw. bei 300°C im Spritzgußverfahren hergestellt wurden.

Eine Zusammenstellung der Eigenschaften der erfindungsgemäßen Zusammensetzung bzw. daraus erhaltener Prüfkörper ist in der Tabelle 1 wiedergegeben.

**Tabelle 1 Formmassen und ihre Eigenschaften**

| | | 1 (Vergleich) | 2 | 3 (Vergleich) |
|---|---|---|---|---|
| **Komponenten [Gew.-Teile]** | | | | |
| A | (PC) | 58 | 58 | 58 |
| B-1 | (PMMA, 74000 g/mol) | 24 | - | - |
| B-2 | (PMMA, 58000 g/mol) | - | 24 | - |
| B-3 | (PMMA, 15000 g/mol) | - | - | 24 |
| C | (ABS-Pfropfpolymer) | 18 | 18 | 18 |
| D-1 | (PETS) | 0,75 | 0,75 | 0,75 |
| D-2 | (Thermostabilisator) | 0,2 | 0,2 | 0,2 |

| **Eigenschaften** | | | | |
|---|---|---|---|---|
| a_{K} (23°C) - 260°C [kJ/m²] | | 39 | 41 | 22 |
| a_{K} (23°C) - 300°C [kJ/m²] | | 32 | 35 | 11 |
| a_{K}-Steilabfall - 260°C [°C] | | -5 | -25 | >RT |
| a_{K}-Steilabfall - 300°C [°C] | | 15 | 0 | >RT |
| Vicat B120 [°C] | | 123 | 120 | 121 |
| MVR (260°C/5kg) [ml/10min] | | 11 | 15 | 33 |
| Schmelzeviskosität (260°C/1000s⁻¹) [Pa·s] | | 364 | 297 | 245 |
| E-Modul [MPa] | | 2009 | 2003 | 2081 |
| Streckspannung [N/mm²] | | 54 | 53 | 55 |
| Reißdehnung [%] | | 104 | 115 | 42 |
| Acrylnitril-Restgehalt - 260°C [ppm] | | 1,2 | 1,1 | 0,6 |
| Acrylnitril-Restgehalt - 300°C [ppm] | | 2,6 | 1,9 | 1,5 |
| VOC-Emission - 260°C [mg C/kg] | | 20 | 17 | 64 |
| VOC-Emission - 300°C [mg C/kg] | | 40 | 35 | 112 |

Die Daten in Tabelle 1 zeigen, dass die erfindungsgemäße Zusammensetzung 2 enthaltend ein PMMA mit einem gewichtsgemittelten Molekulargewicht Mw von 58000 g/mol eine bessere Schmelzefließfähigkeit als das Vergleichsbeispiel 1 aufweist, welche ein PMMA mit dem höherem Molekulargewicht (Mw = 74000 g/mol) enthält. Darüber hinaus weist die erfindungsgemäße Zusammensetzung 2 überraschenderweise auch eine Verbesserung der Tieftemperaturkerbschlagzähigkeiten auf. Die Wärmeformbeständigkeit sowie die Zugeigenschaften beider Zusammensetzungen liegen auf vergleichbar hohem Niveau. Die Anforderungen der Automobilindustrie an die Emission leichtflüchtiger organischer Komponenten werden von der erfindungsgemäßen Zusammensetzung 2 bei einer Verarbeitungstemperatur von 260°C sowie bei einer vergleichsweise hohen Verarbeitungstemperaturen von 300°C erfüllt. Ebenso weist die erfindungsgemäße Zusammensetzung einen niedrigen Restgehalt an Acrylnitril auf, wobei überraschenderweise der Anstieg des Acrylnitrilgehalts bei verschärften Verarbeitungstemperaturen geringer ist als bei der vergleichbaren, dem Stand der Technik entsprechenden Zusammensetzung enthaltend PMMA mit höherem Molekulargewicht. Die Daten in Tabelle 1 zeigen darüber hinaus, daß das Vergleichsbeispiel 3 enhaltend ein PMMA mit weiter reduziertem gewichtsgemittelten Molekulargewicht (Mw = 15000 g/mol) wie erwartet zwar eine bessere Schmelzefließfähigkeit als die erfindungsgemäße Zusammensetzung 2, jedoch signifikant verschlechterte mechanische Eigenschaften (Schlagzähigkeit and Reißdehnung) aufweist. Weiterhin zeigt diese Zusammensetzung 3 signifikant höhere Emissionen flüchtiger organischer Verbindungen (VOCs) und erfüllt somit nicht die entsprechenden Anforderungen der Autmobilindustrie.

Zusammenfassend lässt sich feststellen, dass nur die Zusammensetzungen enthaltend PMMA mit gewichtsgemitteltem Molekulargewicht in dem von dieser Erfindung beanspruchten spezifizierten Bereich sowohl eine verbesserte Schmelzefließfähigkeit als auch verbesserte mechanische Leistungsfähigkeit (Tieftemperaturduktilität) und niedrige VOC-Emissionen aufweisen.

## Patentansprüche

1. Zusammensetzungen bestehend aus
A) 40 bis 93 Gew.-Teile aromatisches Polycarbonat oder aromatisches Polyestercarbonat oder Mischungen hieraus,
B) 5 bis 40 Gew.-Teile Polymethylmethacrylat
C) 2 bis 40 Gew.-Teile ein oder mehrere Pfropfpolymerisate von
C.1 10 bis 90 Gew.-%, bezogen auf Komponente C, wenigstens eines Vinylmonomeren auf
C.2 90 bis 10 Gew.-%, bezogen auf Komponente C, wenigstens einer Pfropfgrundlage ausgewählt aus der Gruppe bestehend aus Dienkautschuke, EP(D)M-Kautschuke (d.h. solche auf Basis Ethylen/Propylen und gegebenenfalls Dien), Acrylat-, Polyurethan-, Silikon-, Silikonacrylat-, Chloropren und Ethylen/Vinylacetat- und Kautschuke,
und
D.1) 0 bis 5 Gew.-Teile Gleit- und Entformungsmittel,
D.2) 0 bis 5 Gew.-Teile Antistatika und/oder Leitmhigkeitsadditive,
D.3) 0 bis 5 Gew.-Teile Stabilisatoren,
D.4) 0 bis 7 Gew.-Teile Farbstoffe und Pigmente,
D.5) 0 bis 10 Gew.-Teile mineralische Füll- und Verstärkungsstoffe,
D.6) 0 bis 5 Gew.-Teile Flammschutzmittel,
D.7) 0 bis 2 Gew.-Teile Antidrippingmitteln und Flammschutzsynergisten, und
D.8) 0 bis 10 Gew.-Teile weitere polymere oder oligomere Verbindungen,
wobei die Angaben der Gewichtsteile jeweils auf die Summe der Gewichtsteile der Komponenten A+B+C bezogen ist,
**dadurch gekennzeichnet, dass** das **Polymethylmethacrylat** gemäß Komponente B) ein gewichtsgemitteltes Molekulargewicht Mw (bestimmt durch GPC in THF bei 40°C mit Polystyrol als Standard) von 25000 bis 70000 g/mol aufweist; und
wobei das Verhältnis von gewichtgemitteltem zu zahlengemitteltem Molekulargewicht Mw/Mn des Polymethylmethacrylats gemäß Komponente B), bestimmt durch GPC in THF bei 40°C mit Polystyrol als Standard, einen Wert zwischen 1 und 2,5 besitzt,
wobei alle Gewichtsteilangaben so normiert sind, dass die Summe der Gewichtsteile der Komponenten A+B+C in der Zusammensetzung 100 ergeben.

2. Zusammensetzung gemäß Anspruch 1, bestehend aus
50 bis 85 Gew.-Teile an Komponente A),
10 bis 40 Gew.-Teile an Komponente B),
5 bis 30 Gew.-Teile an Komponente C),
0 bis 2,5 Gew.-Teile an Komponente D.1),
0 bis 3 Gew.-Teile an Komponente D.2),
0 bis 2 Gew.-Teile an Komponente D.3),
0 bis 5 Gew.-Teile an Komponente D.4),
0 bis 5 Gew.-Teile an Komponente D.5),
0 bis 2 Gew.-Teile an Komponente D.6),
0 bis 0,5 Gew.-Teile an Komponente D.7), und
0 bis 5 Gew.-Teile an Komponente D.8).

3. Zusammensetzung gemäß Anspruch 1, bestehend aus
55 bis 78 Gew.-Teile an Komponente A),
12 bis 30 Gew.-Teile an Komponente B),
7 bis 25 Gew.-Teile an Komponente C),
0 bis 1 Gew.-Teile an Komponente D.1),
0 bis 2 Gew.-Teile an Komponente D.2),
0 bis 1 Gew.-Teile an Komponente D.3),
0 bis 3 Gew.-Teile an Komponente D.4),
0 bis 2 Gew.-Teile an Komponente D.5),
0 bis 1 Gew.-Teile an Komponente D.6),
0 bis 0,2 Gew.-Teile an Komponente D.7), und
0 bis 2 Gew.-Teile an Komponente D.8).

4. Zusammensetzung gemäß einem der Ansprüche 1 bis 3 4, **dadurch gekennzeichnet, dass** das **Polymethylmethacrylat** gemäß Komponente B) ein gewichtsgemitteltes Molekulargewicht Mw (bestimmt durch GPC in THF bei 40°C mit Polystyrol als Standard) 40000 bis 62000 g/mol aufweist.

5. Zusammensetzungen gemäß einem der Ansprüche 1 bis 4, wobei das Verhältnis von gewichtgemitteltem zu zahlengemitteltem Molekulargewicht Mw/Mn des **Polymethylmethacrylats** gemäß Komponente B), bestimmt durch GPC in THF bei 40°C mit Polystyrol als Standard, einen Wert zwischen 1,3 und 2,2 besitzt.

6. Zusammensetzung gemäß einem der Ansprüche 1 bis 5 6, wobei die Zusammensetzung frei ist von Flammschutzmittel (D.5) sowie Antidrippingmittel und Flammschutzsynergisten (D.6).

7. Verfahren zur Herstellung der Zusammensetzung gemäß Anspruch 1 bis 6, in dem man die Bestandteile vermischt und bei erhöhter Temperatur schmelmompoundiert bzw. schmelzextrudiert.

8. Verwendung der Zusammensetzung gemäß Anspruch 1 bis 6 zur Herstellung von Formteilen.

9. Formteile, enthaltend eine Zusammensetzung gemäß Anspruch 1 bis 6.

## Claims

1. Compositions comprising
A) from 40 to 93 parts by weight of aromatic polycarbonate or aromatic polyester carbonate or a mixture thereof,
B) from 5 to 40 parts by weight of polymethyl methacrylate
C) from 2 to 40 parts by weight of one or more graft polymers of
C.1 from 10 to 90 wt.%, based on component C, of at least one vinyl monomer on
C.2 from 90 to 10 wt.%, based on component C, of at least one graft base selected from the group consisting of diene rubbers, EP(D)M rubbers (i.e. those based on ethylene/propylene and optionally diene), acrylate, polyurethane, silicone, silicone acrylate, chloroprene and ethylene/vinyl acetate rubbers,
and
D.1)from 0 to 5 parts by weight of lubricants and mould release agents,
D.2)from 0 to 5 parts by weight of antistatics and/or conductivity additives,
D.3)from 0 to 5 parts by weight of stabilisers,
D.4)from 0 to 7 parts by weight of dyes and pigments,
D.5)from 0 to 10 parts by weight of mineral fillers and mineral reinforcing materials,
D.6)from 0 to 5 parts by weight of flame retardants,
D.7)from 0 to 2 parts by weight of antidripping agents and flame retardant synergists, and
D.8)from 0 to 10 parts by weight of other polymeric or oligomeric compounds,
the parts by weight in each case being based on the sum of the parts by weight of components A+B+C,
**characterised in that** the polymethyl methacrylate according to component B) has a weight-average molecular weight Mw (determined by GPC in THF at 40°C with polystyrene as standard) of from 25,000 to 70,000 g/mol; and
where the value of the ratio of weight-average to number-average molecular weight Mw/Mn of the polymethyl methacrylate according to component B), determined by GPC in THF at 40°C with polystyrene as standard, is from 1 to 2.5,
where all parts by weight data are standardized so that the sum of the parts by weight of components A+B+C in the composition is 100.

2. Composition according to claim 1, comprising
from 50 to 85 parts by weight of component A),
from 10 to 40 parts by weight of component B),
from 5 to 30 parts by weight of component C),
from 0 to 2.5 parts by weight of component D.1),
from 0 to 3 parts by weight of component D.2),
from 0 to 2 parts by weight of component D.3),
from 0 to 5 parts by weight of component D.4),
from 0 to 5 parts by weight of component D.5),
from 0 to 2 parts by weight of component D.6),
from 0 to 0.5 part by weight of component D.7), and
from 0 to 5 parts by weight of component D.8).

3. Composition according to claim 1, comprising
from 55 to 78 parts by weight of component A),
from 12 to 30 parts by weight of component B),
from 7 to 25 parts by weight of component C),
from 0 to 1 part by weight of component D.1),
from 0 to 2 parts by weight of component D.2),
from 0 to 1 part by weight of component D.3),
from 0 to 3 parts by weight of component D.4),
from 0 to 2 parts by weight of component D.5),
from 0 to 1 part by weight of component D.6),
from 0 to 0.2 part by weight of component D.7), and
from 0 to 2 parts by weight of component D.8).

4. Composition according to any one of claims 1 to 3, **characterised in that** the polymethyl methacrylate according to component B) has a weight-average molecular weight Mw (determined by GPC in THF at 40°C with polystyrene as standard) of from 40,000 to 62,000 g/mol.

5. Compositions according to any one of claims 1 to 4, wherein the ratio of weight-average to number-average molecular weight Mw/Mn of the polymethyl methacrylate according to component B), determined by GPC in THF at 40°C with polystyrene as standard, has a value from 1.3 to 2.2.

6. Composition according to any one of claims 1 to 5, wherein the composition is free of flameproofing agent (D.5) and antidripping agent and flameproofing synergists (D.6).

7. Process for the production of the composition according to claim 1 to 6, in which the constituents are mixed and the mixture is melt compounded or melt extruded at elevated temperature.

8. Use of the composition according to claim 1 to 6 in the production of mouldings.

9. Mouldings comprising a composition according to claim 1 to 6.

## Revendications

1. Compositions constituées de
A) 40 à 93 parties en poids de polycarbonate aromatique ou polyestercarbonate aromatique ou de mélanges de ceux-ci,
B) 5 à 40 parties en poids de poly(méthacrylate de méthyle)
C) 2 à 40 parties en poids d'un ou de plusieurs produits de polymérisation par greffage de
C.1 10 à 90 % en poids, par rapport au composant C, d'au moins un monomère vinylique sur
C.2 90 à 10 % en poids, par rapport au composant C, d'au moins une base de greffage choisie dans le groupe constitué par des caoutchoucs diène, des caoutchoucs EP(D)M (c'est-à-dire ceux à base d'éthylène/propylène et éventuellement de diène), des caoutchoucs acrylate, polyuréthane, silicone, silicone-acrylate, chloroprène et éthylène/acétate de vinyle,
et
D.1) 0 à 5 parties en poids de lubrifiants et agents de démoulage,
D.2) 0 à 5 parties en poids d'agents antistatiques et/ou additifs de conductivité,
D.3) 0 à 5 parties en poids de stabilisants,
D.4) 0 à 7 parties en poids de colorants et pigments,
D.5) 0 à 10 parties en poids de charges et matières de renforcement minérales,
D.6) 0 à 5 parties en poids d'agents ignifuges,
D.7) 0 à 2 parties en poids d'agents anticoulure et d'agents synergiques ignifuges, et
D.8) 0 à 10 parties en poids d'autres composés oligomères ou polymères,
les données des parties en poids se rapportant chacune à la somme des parties en poids des composants A+B+C,
**caractérisées en ce que** le **poly(méthacrylate de méthyle)** selon le composant B) présente une masse moléculaire moyenne en poids Mw (déterminée par GPC dans du THF à 40 °C avec du polystyrène comme étalon) de 25 000 à 70 000 g/mole ; et le rapport de la masse moléculaire moyenne en poids à la masse moléculaire moyenne en nombre Mw/Mn du poly(méthacrylate de méthyle) selon le composant B), déterminées par GPC dans THF à 40 °C avec du polystyrène comme étalon, a une valeur comprise entre 1 et 2,5,
toutes les données en parties en poids étant normalisées de sorte que la somme des parties en poids des composants A+B+C dans la composition est égale à 100.

2. Composition selon la revendication 1, constituée de
50 à 85 parties en poids de composant A),
10 à 40 parties en poids de composant B),
5 à 30 parties en poids de composant C),
0 à 2,5 parties en poids de composant D.1),
0 à 3 parties en poids de composant D.2),
0 à 2 parties en poids de composant D.3),
0 à 5 parties en poids de composant D.4),
0 à 5 parties en poids de composant D.5),
0 à 2 parties en poids de composant D.6),
0 à 0,5 partie en poids de composant D.7), et
0 à 5 parties en poids de composant D.8).

3. Composition selon la revendication 1, constituée de
55 à 78 parties en poids de composant A),
12 à 30 parties en poids de composant B),
7 à 25 parties en poids de composant C),
0 à 1 partie en poids de composant D.1),
0 à 2 parties en poids de composant D.2),
0 à 1 partie en poids de composant D.3),
0 à 3 parties en poids de composant D.4),
0 à 2 parties en poids de composant D.5),
0 à 1 partie en poids de composant D.6),
0 à 0,2 partie en poids de composant D.7), et
0 à 2 parties en poids de composant D.8).

4. Composition selon l'une quelconque des revendications 1 à 3, **caractérisée en ce que** le **poly(méthacrylate de méthyle)** selon le composant B) présente une masse moléculaire moyenne en poids Mw (déterminée par GPC dans du THF à 40 °C avec du polystyrène comme étalon) de 40 000 à 62 000 g/mole.

5. Compositions selon l'une quelconque des revendications 1 à 4, dans lesquelles le rapport de la masse moléculaire moyenne en poids à la masse moléculaire moyenne en nombre Mw/Mn du **poly(méthacrylate de méthyle)** selon le composant B), déterminées par GPC dans du THF à 40 °C avec du polystyrène comme étalon, a une valeur comprise entre 1,3 et 2,2.

6. Composition selon l'une quelconque des revendications 1 à 5, la composition étant exempte d'agent ignifuge (D.5) ainsi que d'agent anticoulure et d'agents synergiques ignifuges (D.6).

7. Procédé pour la préparation de la composition selon l'une quelconque des revendications 1 à 6, dans lequel on mélange les composants et on les soumet à une compoundage à chaud ou à une extrusion à chaud, à une température élevée.

8. Utilisation de la composition selon l'une quelconque des revendications 1 à 6, pour la production de pièces moulées.

9. Pièces moulées, contenant une composition selon l'une quelconque des revendications 1 à 6.
